# EUROPEAN PATENT SPECIFICATION

(11) **EP 1 799 041 B1**
(45) Date of publication and mention of the grant of the patent: **13.01.2010**
(21) Application number: 05779275.6
(22) Date of filing: 13.09.2005
(51) Int. Cl.: A22B 5/00, A22B 5/04

(54) **A METHOD AND AN APPARATUS FOR CHECKING BLEEDING**
VERFAHREN UND VORRICHTUNG ZUM ÜBERPRÜFEN DES AUSBLUTENS
PROCEDE ET APPAREIL POUR LA VERIFICATION DE SAIGNEMENT

(30) Priority: 14.09.2004 DK 200401398
(43) Date of publication of application: 27.06.2007
(73) Proprietor: Slagteriernes Forskningsinstitut, 4000 Roskilde (DK)
(72) Inventor: MADSEN, Niels, Lynge, DK-1961 Frederiksberg C (DK); BORGGAARD, Claus, DK-4130 Viby Sjælland (DK); RASMUSSEN, Allan, J., DK-4250 Fuglebjerg (DK)
(74) Representative: Carlsson, Eva
(86) International application number: PCT/DK2005/000580
(87) International publication number: WO 2006/029628

(56) References cited:
- DE-A1- 3 133 990
- DE-A1- 3 133 991
- DE-A1- 10 110 360
- DK-B- 161 796
- JP-A- 2002 000 172
- US-A- 6 118 542

## Description

The present invention relates to a method and an apparatus for checking bleeding from slaughter animals after they have been stuck. A prior art method and apparatus is known from DK-B-161 796.

Killing by sticking is typically performed in pig slaughterhouses, where the animals are first stunned by CO₂ and suspended in a hind leg. After bleeding, the slaughter animal is scalded. If the sticking has not been effective, the animal will come round from the stunning suspended by the hind leg or when encountering the scalding tank, which is not only bad from an animal welfare point of view, but also causes a production standstill. It is, therefore, of the greatest importance to ensure that all slaughter animals are stuck and bled correctly.

For this purpose, a number of different control measures are known, which may roughly be divided into two groups, viz. checking that the very sticking has actually been performed and checking of the amount of blood.

In the former group for instance the use of photocells is known, where the arm of the slaughter-man interrupts the light beam, when he advances the knife to the slaughter animal, as well as electrically operated knives, in which a short circuit is caused and a signal is given, when the knife gets into contact with the slaughter animal. None of these methods are, however, sufficiently reliable, as neither the precision nor the efficiency of the sticking is checked. Moreover, there are so many false alarms, in particular by the first mentioned method, that they are not taken seriously enough.

The latter group comprises the systems, in which the amount of blood is registered, for instance by weighing. However, these systems require collection of the blood, which is not always possible in practice. For instance because of the fact that a stop further down the slaughter line entails a piling up of stunned animals, which, therefore, have to be stuck with a common knife. Thus, during these periods, the check will not be in operation.

It is, therefore, the object of the present invention to provide a method for checking bleeding, which method may be used irrespective of the manner of sticking, and where both the risk of a false acceptance and the number of false alarms are minimized. Furthermore, it is an object to provide an apparatus, which may be used in such a method.

The object is met by a method, according to which, after the removal of the sticking knife, at least one picture is taken covering a region below the slaughter animal, whereby the amount of blood in the picture is determined as an area of the picture field, whereby the size of this blood area is compared with a predetermined minimum value and whereby an alarm signal is given, if the blood area is smaller than the minimum value. As only the amount of blood that drains off from the slaughter animal after the removal of the sticking knife and after the ending of the actual bleeding is taken into account, the method is not depending on whether the sticking is performed with a common knife or a hollow blood-draining knife. It is not necessary to take the picture immediately after the actual bleeding, where the amount of blood is biggest. A similar extent of precision may be obtained by taking the picture in the course of the "secondary bleeding", where the sticking knife has been removed. The minimum value just has to be set proportionally lower. The most suitable position in the bleeding area is determined by tests.

The bigger the blood area relative to the total area of the picture field, the more precise the method will be. On the other hand, the picture field may not be so small that the stream of blood falls outside it, if the slaughter animal for instance swings in the suspension. It is, therefore, preferred to take the picture, while the slaughter animal is suspended with its head downwards, whereby a part of the head of the slaughter animal is shown in the picture.

The blood area may for instance be determined as the area, which has colours within a given colour or light intensity interval, for instance a red value of 150 - 255 in the RGB colour system for a colour picture or a light intensity of 30 - 130 for a black-and-white picture, where 0 is black and 255 is white. A prerequisite for this is that the background forms a contrast. A greenish background for colour pictures and a dark background for black-and-white pictures would be preferable.

In a particularly preferred embodiment of the invention the slaughter animal is set in motion, for instance by being advanced on a conveyor, and two pictures are taken by the same camera. The movement means that both the actual slaughter animal and the stream of blood will be located at different places in the two pictures. This may facilitate the determination of the parts of the picture showing blood from the slaughter animal, as for instance blood stains on the back wall, which are not to be included in the blood area, will be stationary and may be eliminated electronically.

A particularly advantageous method of distinguishing those elements in the pictures, which are in motion, from those, which are stationary, is to subtract the two pictures, whereby stationary objects present in both picture fields is eliminated. Then the area below the slaughter animal of the regions not eliminated may be determined and compared with a predetermined minimum value.

To accurately distinguish blood from other elements in motion, i.e. parts of the actual slaughter animal, it is preferred not to include the part of the picture field showing the actual slaughter animal in the area determination and the comparison. This exclusion of a part of the picture may in a preferred embodiment be made by insertion of a line in the picture in or immediately below the lowest point of the slaughter animal and only the parts of the picture under this line are included in the area determination and the comparison.

If a camera is used, which takes pictures continuously, the best suitable pictures may be selected and compared. Alternatively, a camera may be used, which takes the pictures by means of a release. It will then be appropriate to use a sensor, which registers that a new slaughter animal has entered the picture field. Such a sensor may advantageously be positioned on the conveyor.

When two successive pictures are taken, it is preferred to take the second picture not more than 1 second after the first one, for instance approximately 40 milliseconds after the first one. This comparatively short time interval ensures that the stream of blood remains substantially unchanged from picture to picture. Another advantage is that the risk of the next slaughter animal on the slaughter line getting into the picture field is minimized.

In order to minimize the number of error sources, a light source may be caused to illuminate the slaughter animal and the stream of blood, the light source being positioned in such a manner that the cone of light hits neither the camera nor the background behind the slaughter animal and/or the stream of blood. In this manner, the background not illuminated appears comparatively dark, and in addition, the background may be of a dark colour. Depending on a number of factors, such as the design of the background, it may, moreover, be advantageous to let the light source emit light within a delimited frequency interval, for instance the infrared, the visible or the ultraviolet areas, and/or to let the camera be sensitive to light within a delimited frequency interval.

It is preferred to carry out the determination of the blood area and the comparison with the set value automatically by means of a computer.

In the following an embodiment of the invention will be described in further detail with reference to the accompanying drawings, in which
Figs. 1a and 1b are schematic views of the positioning of the camera and the light source, seen from the side and from above, respectively, and
Figs. 2a, 2b, 2c and 2d are sketches of the two pictures taken by the camera, a superposition of the two sketches and a subtraction thereof.

In connection with the slaughtering of pigs the animals are typically stunned by being lowered into a pit containing CO₂. Subsequently, they are suspended in a conveyor in the ceiling, and the actual killing takes place by means of a knife, which is stuck into the carotid artery, following which the animals bleed. During the bleeding the blood is often collected via the sticking knife into containers, but a part of it does not run off until after the knife has been removed on the path of the slaughter animals through the so-called bleeding area, where a "secondary bleeding" takes place.

As the actual killing depends on the sticking, it is of decisive importance that it is precise and that all pigs are stuck, before they wake up from the stunning. According to the present invention this is ensured by an analysis of one or more pictures of each individual slaughter animal. The picture is preferably taken in the bleeding area, where most of the blood has run off, but where, if the sticking has been made correctly, a certain bleeding will still occur.

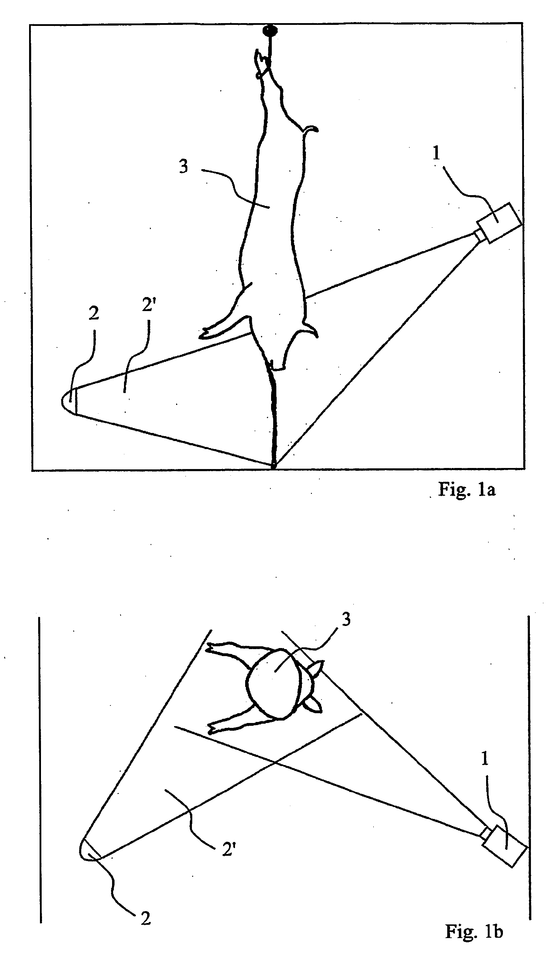

Figs. 1a and 1b show the positioning of a video camera 1 and a light source 2 in the bleeding area, seen from above and from the end of the area closest to the scalding tank, respectively. As will be seen, the light source 2 is positioned in such a manner that the slaughter animal 3 is illuminated substantially on the whole surface facing the camera 1, but the light cone 2' cannot hit the camera directly.

The positioning shown of the light source 2 relative to the camera 1 has the effect that the background of pictures taken by the camera is not hit by the light cone. However, embodiments may also be contemplated, in which the light source is positioned in connection with the camera.

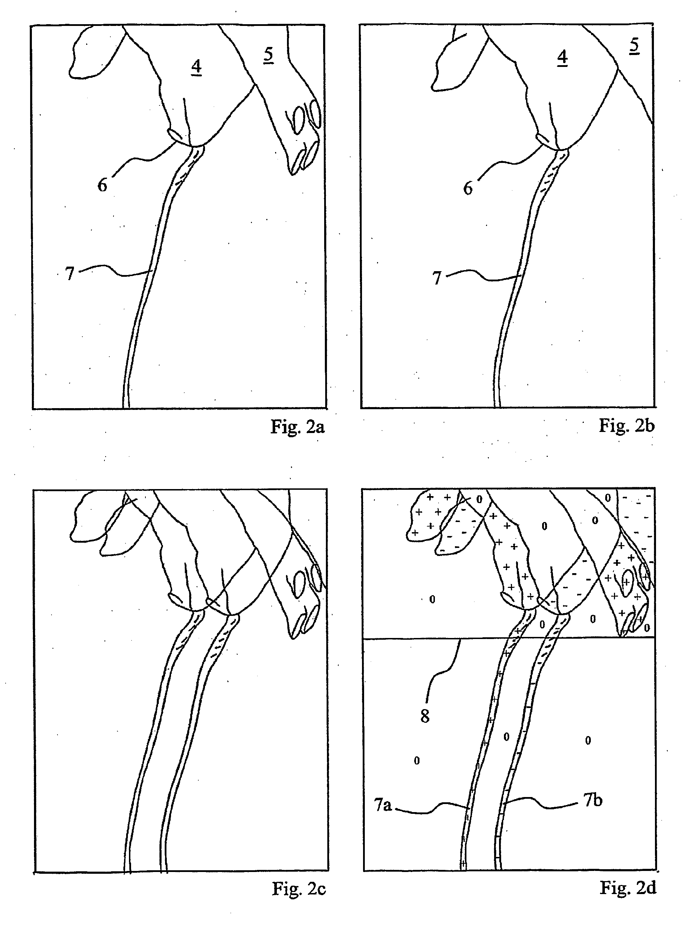

Figs. 2a and 2b shows two different pictures of the same pig on its way through the bleeding area. The picture has been limited to a part of the head 4 and the area below, but one or more forelegs 5 may appear, as will in particular be seen from Fig. 2a. A stream of blood 7 is running from the snout, which stream of blood may be divided into several smaller streams (not shown). In cases, where the sticking has been performed correctly, there will, at this time, be so much blood left in the slaughter animal that the stream will be continuous with a certain minimum cross section.

By the picture analysis the fraction of the picture field, which is covered by the stream of blood, is determined and this fraction is compared with a predetermined minimum value. The actual area determination may take place in many different ways, which may be more or less complicated and automated. The analysis may for instance be carried out fully automated by means of a computer, which automatically identifies the blood. This identification may for instance take place on basis of the colour of the various elements in the picture. Blood will typically have a red value in the interval 100 to 200, 0 being minimum and 225 maximum, whereas the value of green and blue will be close to zero. Pigskin will typically have colour values in the area red 250, green 200 and blue 150. However, a black-and-white picture may also be used, in which blood will typically have light intensities below 200, whereas pigskin will typically appear lighter.

A drawback of the direct analysis of a single picture is, however, that the accuracy depends to a high extent on the difference between the background colour and the colour of the blood. This means that blood stains on a wall in the background may be included in the blood area or that it may be difficult to distinguish the blood from a partially reflecting background.

In a particularly preferred embodiment it is therefore preferred to take two pictures shortly after one another at a period of time, in which the slaughter animal is being moved. In this way, slaughter animal and blood will be identifiable as the elements appearing in different places in the two pictures. These elements are particularly easy to identify by means of a superposition or a subtraction of the two pictures. An example of a superposition is shown in Fig. 2c. In a subtraction, the stationary elements will get values close to zero, whereas elements, which have moved or only appear in one of the pictures, will get a negative or positive value. This is illustrated in Fig. 2d. The stream of blood, which is in motion and consequently appears at different places in the two pictures, now appears both in a positive 7a and in a negative version 7b. If the picture analysis is performed as a determination of the areas having a value, which is not zero, the stream of blood thus will get a seeming area, which is two times the actual blood area. To avoid this, it is preferred to leave out the negative regions from the picture analysis. Alternatively, the minimum value for the blood area may be set correspondingly higher.

As the pig constitutes a considerable part of the positive and negative areas in the subtracted picture, as will be clearly seen from Fig. 2d, it is preferred to cut the picture prior to the area comparison. Such a cut is illustrated by the horizontal line 8, and in the analysis only the part of the picture under the line will be included.

If the movement is so small that the elements in motion overlap one another in the two pictures, they will become completely or partially eliminated together with the actually stationary elements. This constitutes a possible error source, but as this will lead to false alarms and not false acceptances, it is considered to be acceptable. The problem may, however, be minimized by ensuring that the movement is evenly advancing and, if necessary, by increasing the time interval between the two pictures or by taking a third picture.

It should be understood that the embodiments, which have been described above, are only to be considered as examples. Combinations of the features in the embodiments shown and described and falling within the scope of the invention may also be contemplated. The slaughter animal may for instance be stuck in a different way or it may be a question of other slaughter animals than pigs, for instance sheep.

## Claims

1. A method of checking bleeding from slaughter animals after they have been stuck, **characterized in that** after removal of the sticking knife at least one picture is taken covering a region below the slaughter animal (3), that the amount of blood (7) in the picture is determined as an area of the picture field, that the size of this blood area is compared with a predetermined minimum value and that an alarm signal is given, if the blood area is smaller than the minimum value.

2. A method according to claim 1, **characterized in that** the picture is taken, while the slaughter animal is suspended with its head downwards, a part of the head (4) of the slaughter animal being shown in the picture.

3. A method according to claim 1 or 2, **characterized in that** the blood area is determined as the area, which has colours within a given colour or light intensity interval, for instance a red value of 150 - 255 in the RGB colour system for a colour picture or a light intensity of 30 - 130 for a black-and-white picture, where 0 is black and 255 is white.

4. A method according to any one of the preceding claims, **characterized in that** the slaughter animal (3) is set in motion, for instance by being advanced on a conveyor, and that two pictures are taken by the same camera (1).

5. A method according to claim 4, **characterized in that** the two pictures are subtracted, stationary objects present in both picture fields being eliminated, and that the area below the slaughter animal of the regions not eliminated is determined and compared with a predetermined minimum value.

6. A method according to at least one of the preceding claims, **characterized in that** the part of the picture field showing the actual slaughter animal (3, 4, 5) is not included in the area determination and the comparison.

7. A method according to claim 6, **characterized in that** a line (8) is inserted in the picture in or immediately below the lowest point of the slaughter animal and that only those parts of the picture, which are below this line, are included in the area determination and the comparison.

8. A method according to any one of the preceding claims, **characterized in that** the picture is taken, when a sensor registers that a new slaughter animal (3) has entered the picture field.

9. A method according to any one of the claims 4 - 8, **characterized in that** the second picture is taken not more than 1 second after the first one, for instance approximately 40 milliseconds after the first one.

10. A method according to any one of the preceding claims, **characterized in that** a light source (2) is caused to illuminate the slaughter animal (3) and the stream of blood (7), the light source being positioned in such a manner that the cone of light (2') hits neither the camera (1) nor the background behind the slaughter animal and/or the stream of blood.

11. An apparatus for checking bleeding from slaughter animals after they have been stuck, **characterized in that** it comprises a camera (1) positioned to take pictures of the lowest part of the slaughter animal (4, 5) and regions below it, as well as equipment for determining the amount of blood (7) in the pictures.

12. An apparatus according to claim 11, **characterized in that** it comprises a light source (2) positioned in such a manner that the light cone (2') hits neither the camera (1) nor the background behind the lowest part of the slaughter animal and/or regions below it, but illuminates the lowest part of the slaughter animal (3) and the blood (7) draining off it.

13. An apparatus according to one of the claims 11 - 12, **characterized in that** the light source (2) is of the type, which primarily or exclusively emits light within a delimited frequency interval, for instance the infrared, the visible or the ultraviolet regions.

14. An apparatus according to one of the claims 11 - 13, **characterized in that** the camera is of the type, which primarily or exclusively take pictures within a delimited frequency interval, for instance the infrared, the red, the visible or the ultraviolet regions.

15. An apparatus according to one of the claims 11 - 14, **characterized in that** the camera (1) is connected with a computer, which is made capable of performing an area determination in pictures and a comparison of the area with a predetermined threshold value.

16. An apparatus according to any one of the claims 11 - 15, **characterized in that** it comprises a sensor, which registers when an slaughter animal (3) enters the picture field, and **in that** this sensor is connected with the release mechanism of the camera.

17. An apparatus according to claim 16, **characterized in that** the sensor is a switch positioned in connection with a conveyor for conveying the slaughter animals (3) or a photocell in the travelling path of the slaughter animals.

## Patentansprüche

1. Verfahren zum Prüfen des Ausblutens von Schlachttieren, nachdem sie gestochen worden sind, **dadurch gekennzeichnet, dass** nach dem Entfernen des Stechmessers mindestens ein Bild aufgenommen wird, das einen Bereich unter dem Schlachttier (3) abdeckt, dass die Menge Blut (7) in dem Bild als Fläche des Bildfeldes bestimmt wird, dass die Größe dieser Blutfläche mit einem vorbestimmten Minimalwert verglichen wird und dass ein Alarmsignal gegeben wird, wenn die Blutfläche kleiner als der Minimalwert ist.

2. Verfahren nach Anspruch 1, **dadurch gekennzeichnet, dass** das Bild aufgenommen wird, während das Schlachttier mit seinem Kopf nach unten aufgehängt ist, wobei ein Teil des Kopfes (4) des Schlachttiers in dem Bild gezeigt ist.

3. Verfahren nach Anspruch 1 oder 2, **dadurch gekennzeichnet, dass** die Blutfläche als die Fläche bestimmt wird, die Farben innerhalb eines gegebenen Farb- oder Lichtintensitätsintervall aufweist, zum Beispiel einen Rotwert von 150 - 255 im RGB-Farbsystem für ein Farbbild oder eine Lichtintensität von 30 - 130 für ein Schwarzweißbild, wobei 0 schwarz und 255 weiß ist.

4. Verfahren nach einem der vorstehenden Ansprüche, **dadurch gekennzeichnet, dass** das Schlachttier (3) in Bewegung versetzt wird, zum Beispiel, indem es an einem Förderer vorwärtsbewegt wird, und dass zwei Bilder von derselben Kamera (1) aufgenommen werden.

5. Verfahren nach Anspruch 4, **dadurch gekennzeichnet, dass** die zwei Bilder subtrahiert werden, wobei stationäre Objekte, die in beiden Bildern vorhanden sind, eliminiert werden, und dass die Fläche der nicht eliminierten Bereiche unter dem Schlachttier bestimmt und mit einem vorbestimmten Minimalwert verglichen wird.

6. Verfahren nach mindestens einem der vorstehenden Ansprüche, **dadurch gekennzeichnet, dass** der Teil des Bildfeldes, der das tatsächliche Schlachttier (3, 4, 5) zeigt, nicht in die Flächenbestimmung und den Vergleich einbezogen ist.

7. Verfahren nach Anspruch 6, **dadurch gekennzeichnet, dass** in dem Bild eine Linie (8) in oder unmittelbar unter dem niedrigsten Punkt des Schlachttiers eingefügt wird und dass nur die Teile des Bildes, die sich unter dieser Linie befinden, in die Flächenbestimmung und den Vergleich einbezogen werden.

8. Verfahren nach einem der vorstehenden Ansprüche, **dadurch gekennzeichnet, dass** das Bild aufgenommen wird, wenn ein Sensor registriert, dass ein neues Schlachttier (3) in dem Bildfeld angekommen ist.

9. Verfahren nach einem der Ansprüche 4 bis 8, **dadurch gekennzeichnet, dass** das zweite Bild nicht mehr als 1 Sekunde nach dem ersten aufgenommen wird, zum Beispiel etwa 40 Millisekunden nach dem ersten.

10. Verfahren nach einem der vorstehenden Ansprüche, **dadurch gekennzeichnet, dass** bewirkt wird, dass eine Lichtquelle (2) das Schlachttier (3) und den Strom Blut (7) beleuchtet, wobei die Lichtquelle derart positioniert wird, dass der Lichtkegel (2') weder die Kamera (1) noch den Hintergrund hinter dem Schlachttier und/oder den Strom Blut erfasst.

11. Vorrichtung zum Prüfen des Ausblutens von Schlachttieren, nachdem sie gestochen worden sind, **dadurch gekennzeichnet, dass** sie eine Kamera (1), die positioniert ist, um Bilder des niedrigsten Teils des Schlachttiers (4, 5) und Bereichen unter ihm aufzunehmen, sowie Einrichtungen zum Bestimmen der Menge Blut (7) in dem Bild umfasst.

12. Vorrichtung nach Anspruch 11, **dadurch gekennzeichnet, dass** sie eine Lichtquelle (2) umfasst, die derart positioniert ist, dass der Lichtkegel (2') weder die Kamera (1) noch den Hintergrund hinter dem niedrigsten Teil des Schlachttiers und/oder Bereiche darunter erfasst, sondern den niedrigsten Teil des Schlachttiers (3) und das davon ablaufende Blut (7) ausleuchtet.

13. Vorrichtung nach Anspruch 11 oder 12, **dadurch gekennzeichnet, dass** die Lichtquelle (2) von der Art ist, die vor allem oder ausschließlich Licht innerhalb eines begrenzten Frequenzintervalls aussendet, zum Beispiel im Infrarot-, sichtbaren oder Ultraviolettbereich.

14. Vorrichtung nach einem der Ansprüche 11 bis 13, **dadurch gekennzeichnet, dass** die Kamera von der Art ist, die vor allem oder ausschließlich Bilder innerhalb eines begrenzten Frequenzintervalls aufnimmt, zum Beispiel im Infrarot-, roten, sichtbaren oder Ultraviolettbereich.

15. Vorrichtung nach einem der Ansprüche 11 bis 14, **dadurch gekennzeichnet, dass** die Kamera (1) mit einem Computer verbunden ist, der dazu befähigt ist, eine Flächenbestimmung in Bildern und einen Vergleich der Fläche mit einem vorbestimmten Schwellenwert vorzunehmen.

16. Vorrichtung nach einem der Ansprüche 11 bis 15, **dadurch gekennzeichnet, dass** sie einen Sensor umfasst, der registriert, wenn ein Schlachttier (3) in dem Bildfeld ankommt, und dass dieser Sensor mit dem Auslösemechanismus der Kamera verbunden ist.

17. Vorrichtung nach Anspruch 16, **dadurch gekennzeichnet, dass** der Sensor ein in Verbindung mit einem Förderer zum Fördern der Schlachttiere (3) positionierter Schalter oder eine Fotozelle in der Bewegungsbahn der Schlachttiere ist.

## Revendications

1. Procédé de vérification du saignement d'animaux d'abattage une fois qu'ils ont été frappés, **caractérisé en ce que**, après le retrait du couteau à saigner, on prend au moins une image qui couvre une région en dessous de l'animal d'abattage (3), **en ce que** la quantité de sang (7) dans l'image est déterminée comme étant une superficie du champ d'image, **en ce que** la quantité de cette superficie de sang est comparée à une valeur minimale prédéterminée, et **en ce qu'**un signal d'alarme est émis si la superficie de sang est inférieure à la valeur minimale.

2. Procédé selon la revendication 1, **caractérisé en ce que** l'image est prise pendant que l'animal d'abattage est suspendu la tête vers le bas, une partie de la tête (4) de l'animal d'abattage étant représentée dans l'image.

3. Procédé selon la revendication 1 ou 2, **caractérisé en ce que** la superficie de sang est déterminée comme étant la superficie qui comprend des couleurs se situant dans un intervalle donné de couleur ou d'intensité lumineuse, par exemple une valeur de rouge de 150 à 255 dans le système couleur RVB pour une image couleur, ou une intensité lumineuse de 30 à 130 pour une image en noir et blanc, 0 étant le noir et 255 le blanc.

4. Procédé selon l'une quelconque des revendications précédentes, **caractérisé en ce que** l'animal d'abattage (3) est mis en mouvement, en étant par exemple avancé par un transporteur, et **en ce que** deux images sont prises par la même caméra (1).

5. Procédé selon la revendication 4, **caractérisé en ce que** les deux images sont soustraites, ce qui fait que les objets stationnaires présents dans les deux images sont éliminés, et **en ce que** la superficie en dessous de l'animal d'abattage dans les régions non éliminées est déterminée et comparée à une valeur minimale prédéterminée.

6. Procédé selon l'une au moins des revendications précédentes, **caractérisé en ce que** la partie du champ d'image montrant l'animal d'abattage (3, 4, 5) proprement dit n'est pas comprise dans la détermination de superficie et la comparaison.

7. Procédé selon la revendication 6, **caractérisé en ce qu'**une ligne (8) est insérée dans l'image dans ou immédiatement en dessous du point le plus bas de l'animal d'abattage, et **en ce que** seules les parties de cette image situées en dessous de la ligne sont incluses dans la détermination de superficie et la comparaison.

8. Procédé selon l'une quelconque des revendications précédentes, **caractérisé en ce que** l'image est prise lorsqu'un capteur détecte qu'un nouvel animal d'abattage (3) est entré dans le champ d'image.

9. Procédé selon l'une quelconque des revendications 4 à 8, **caractérisé en ce que** la seconde image est prise au maximum une seconde après la première, par exemple environ 40 millisecondes après la première.

10. Procédé selon l'une quelconque des revendications précédentes, **caractérisé en ce qu'**une source de lumière (2) illumine l'animal d'abattage (3) et le flux de sang (7), laquelle source de lumière étant disposée de sorte que le cône de lumière (2') ne heurte ni la caméra (1) ni l'arrière-plan derrière l'animal d'abattage et/ou le flux de sang.

11. Appareil de vérification du saignement d'animaux d'abattage une fois qu'ils ont été frappés, **caractérisé en ce qu'**il comprend une caméra (1) positionnée de manière à prendre des images de la partie la plus basse de l'animal d'abattage (4, 5) et des régions situées en dessous, ainsi qu'un équipement permettant de déterminer la quantité de sang (7) dans les images.

12. Appareil selon la revendication 11, **caractérisé en ce qu'**il comprend une source de lumière (2) disposée de sorte que le cône de lumière (2') ne heurte ni la caméra (1) ni l'arrière-plan derrière la partie la plus basse de l'animal d'abattage et/ou les régions en dessous, mais illumine la partie la plus basse de l'animal d'abattage (3) ainsi que le sang (7) qui s'en écoule.

13. Appareil selon l'une quelconque des revendications 11 à 12, **caractérisé en ce que** la source de lumière (2) est du type qui émet de la lumière essentiellement ou exclusivement dans une plage de fréquence prédéterminée, par exemple dans les régions infrarouge, visible ou ultraviolet.

14. Appareil selon l'une quelconque des revendications 11 à 13, **caractérisé en ce que** la caméra est du type qui prend essentiellement ou exclusivement des images dans une plage de fréquences prédéterminée, par exemple dans les régions infrarouge, visible ou ultraviolet.

15. Appareil selon l'une quelconque des revendications 11 à 14, **caractérisé en ce que** la caméra (1) est connectée à un ordinateur qui est capable d'effectuer une détermination de superficie dans les images et une comparaison de la superficie à une valeur seuil prédéterminée.

16. Appareil selon l'une quelconque des revendications 11 à 15, **caractérisé en ce qu'**il comprend un capteur qui détecte le moment où un animal d'abattage (3) entre dans le champ d'image, et **en ce que** ce capteur est connecté à un mécanisme de déclenchement de la caméra.

17. Appareil selon la revendication 16, **caractérisé en ce que** le capteur est un commutateur disposé en relation avec un transporteur servant à transporter les animaux d'abattage (3) ou avec une cellule photoélectrique située dans le trajet de déplacement des animaux d'abattage.
